# EUROPEAN PATENT SPECIFICATION

(11) **EP 0 745 507 B1**
(45) Date of publication and mention of the grant of the patent: **31.05.2000**
(21) Application number: 96830105.1
(22) Date of filing: 08.03.1996
(51) Int. Cl.: B60N 2/28

(54) **Safety chair for children**
Sicherheitssitz für Kinder
Siège de sécurité pour enfants

(30) Priority: 02.06.1995 IT BS950052 U; 26.09.1995 IT BS950086 U
(43) Date of publication of application: 04.12.1996
(73) Proprietor: FOPPA PEDRETTI S.p.A., 24064 Grumello del Monte, Bergamo (IT)
(72) Inventor: Bonetti, Luciano, Ing., 24060 Telgate (Bergamo) (IT)
(74) Representative: Manzoni, Alessandro

(56) References cited:
- EP-A- 0 301 281
- GB-A- 2 126 882
- GB-A- 2 165 443
- US-A- 3 669 492
- US-A- 3 951 450
- US-A- 4 033 622

## Description

The present invention concerns safety chairs for children, and more particularly it pertains to chairs designed to be applied to a seat in a vehicle, either front ahead or front back.

Chairs for children have already been proposed in various forms with rigid frame (US-A-4,033,622) as well as with folding frame (GB-A-2 165 443), the latter in order to make a chair more compact when it is transported or replaced after use.

The chair according to the present invention is of folding type and advantageously realized with a new, original combination of elements which permits to obtain an embodiment which is relatively simple and economical but also extremely reliable, and to make for easy positioning for use and folding thereof after use.

The chair according to the present invention is claimed in claim 1. However, it will be described more in detail with reference to accompanying, indicative and non-limitative drawings, in which:
Fig. 1 shows a perspective view from the front of the chair ready for use;
Fig. 2 shows a perspective view from the back of the chair, again ready for use
Fig. 3 shows a side view of the chair in Fig. 1 and, in section line, the chair in unfastened condition ready for folding;
Fig. 4 shows a median vertical sectional view of the chair;
Fig. 5 shows the chair folded;
Fig. 6 shows the chair ready for use, with a base crutch
Fig. 7 shows a perspective view of the chair from the back, according to a construction variant applying to the folding joint and frame fastening; and
Fig. 8 shows a side sectional view of the chair modified as illustrated in Fig. 7.

The chair illustrated herein shows a supporting structure 10 designed to be provided with a body or upholstering 10a which will receive the child sitting therein.

Such structure comprises: a base frame or plane 11 functioning as a support for the seat of the chair; a frame or plane 12 supporting the back of the chair; an oblique frame 13 which connects the front of the base frame or plane 11 to the frame or plane 12 of the back; and an auxiliary frame for fastening/unfastening 14. Under the base frame or plane 11 a crutch-frame 15 is jointed as described below.

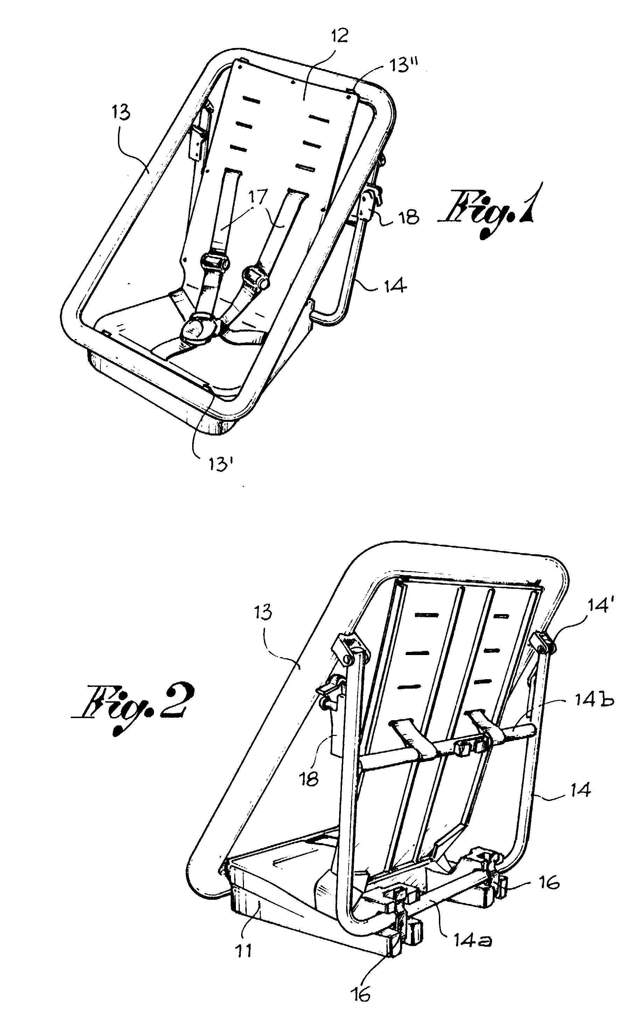

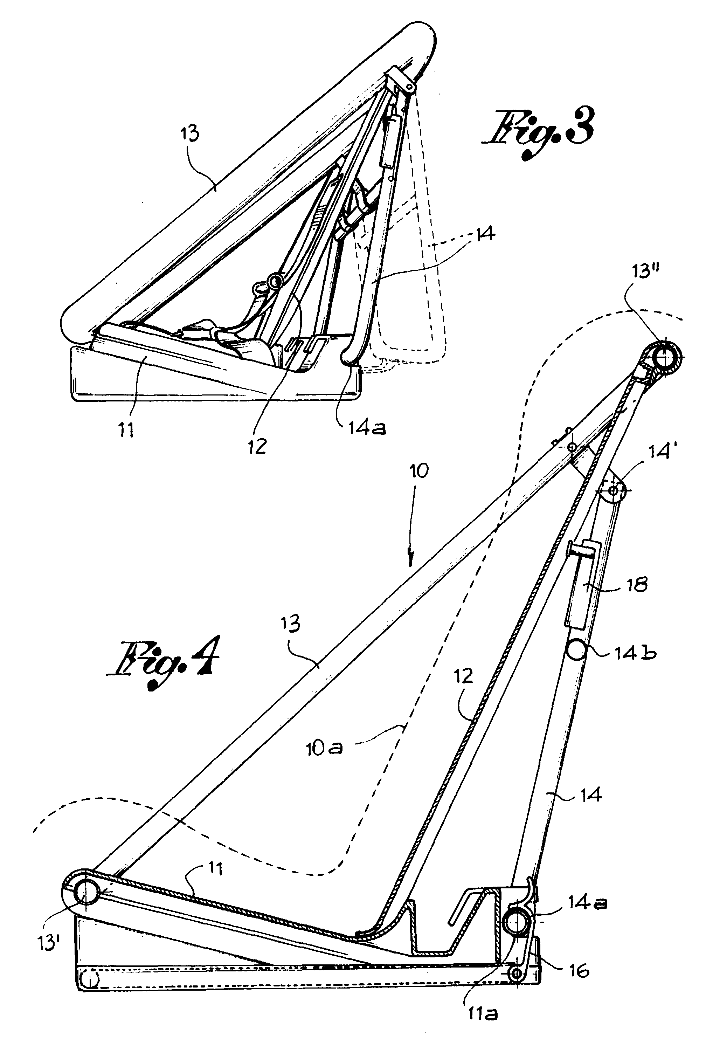

According to a first embodiment as shown in Figs. 1 to 6, the oblique frame 13, which may be upholstered, is jointed, at 13', to the front of the base frame or plane 11 and at 13" to the top of the plane or frame 12 of the back. Such frame 12 is therefore connected to the oblique frame 13, but it is free at its lower part and slidingly rests on the base frame or plane 11.

The frame for fastening/unfastening 14 is substantially U-shaped, with the ends of its parallel arms jointed, at 14', to the sides of the oblique frame and with its lower cross-piece 14a introduced in holes 11a provided in the back of the base frame or plane 11 and blocked in such holes by means of fasteners 16.

At an intermediate level on the auxiliary frame 14, a smaller cross-piece 14b is fixed which is connected to safety belts 17 for the child sitting on the chair.

On the parallel arms of the auxiliary frame 14, fasteners or loops 18 are provided for the safety belt of the vehicle, which shall hold the chair on a seat of the vehicle.

In practice, the chair is positioned ready for use when the frame 12 of the back is upright above the base frame or plane 11 and the lower cross-piece of the auxiliary frame is fastened in the holes 11a provided at the back of the base frame or plane 11 as shown in Figs. 1 to 4.

The chair may be folded by simply unfastening the lower cross-piece 14a, bringing it to the back of the back frame and turning the back over backwards, along with the oblique frame 13, so as to arrange it parallel to the base plane, as shown in Fig. 5. In this way the chair becomes flat in order to make it more compact during transport or when replacing it.

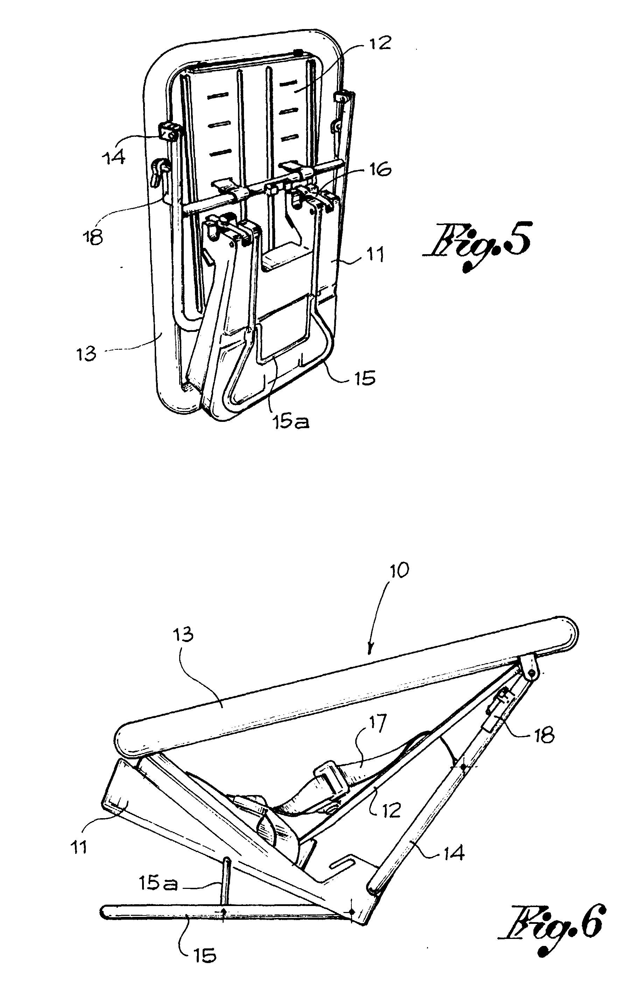

Moreover, when the chair is positioned ready for use, it may also rest on the crutch 15. Such crutch is pivoted to the base frame or plane 11, preferably with the same pins as the fasteners 16 which block the auxiliary frame 14. When the crutch 15 is not used, it is folded and concealed on the base - see Fig. 5; when it is used, it is positioned oblique and leant to the base by means of a prop 15a as shown in Fig. 6.

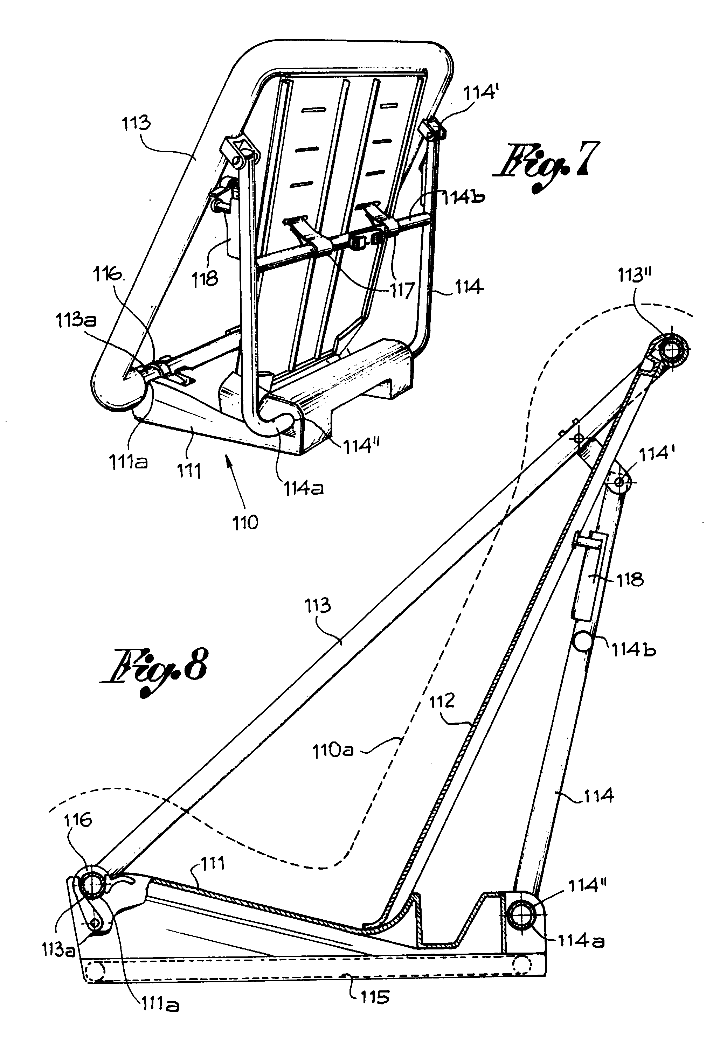

According to a further, equivalent, embodiment as shown in Figs. 7 and 8, the chair structure still comprises a base frame or plane 111 functioning as a support for the chair seat, a plane or frame 112 supporting the back of the chair, an oblique frame 113 which connects the front of the base frame or plane 111 to the plane or frame 112 of the back, and a back frame 114. A crutch-frame 115 is jointed below the base frame or plane 11.

In this embodiment however, the oblique frame 113 comprises a lower cross-piece 113a which is arranged in holes 111a provided in the front of the base frame or plane 111 and is blocked in said holes through fasteners 116.

At the top, said oblique frame 113 is jointed, at 113", to the top of the plane or frame 112 of the back. Said frame 112 is therefore connected to the oblique frame 113 but it is free at its lowest part and slidingly rests on the base frame or plane 11 as in the first embodiment.

The back frame 114, substantially U-shaped, has its parallel arms jointed to the sides of the oblique frame, at 114', and its lower cross-piece 114a rotably jointed, though immovable, to the base frame or plane, at 114".

For the rest, the chair in Figs. 7 and 8 is similar to the chair in Figs. 1 to 6.

This chair is positioned ready for use when the frame 112 of the back is in upright position above the base frame or plane 111 and the lower cross-piece 113a of the oblique frame 113 is introduced in the holes 11a provided in the front of the base frame or plane 111.

The chair may be folded by simply unfastening the cross-piece 113a of the oblique frame 113 from the base 111 and turning the frame over backwards, along with the support of the back 112 and with the back frame 114, which will therefore rotate on the cross-piece 114a.

## Claims

1. A safety chair for children designed to be applied to a seat in a vehicle comprising an upholstered supporting structure (10a), characterized in that it includes a base frame or plane (11) supporting the seat, a frame or plane supporting the back which rises from the base frame or plane (11), an oblique frame (13) which connects the front of the base frame or plane (11) to the top of the back frame (12) and an auxiliary frame (14) which connects the oblique frame (13) to the back of the base frame or plane (11), at least one of the oblique frame (13; 113) and said auxiliary frame (14) being designed to be fastened to the base frame or plane (11) so as to keep the back upright when the chair is positioned ready for use, or unfastened to permit overturning into a folded position of the back frame (12) parallel to the base frame or plane (11).

2. A safety chair for children according to claim 1, wherein said auxiliary frame (14) is fastened to the back of the base frame or plane (11) so as to keep the back (12) upright when the chair is ready for use, and unfastened so as to permit overturning of the back frame (12) parallel to the base frame or plane (11).

3. A safety chair according to claim 2, wherein said oblique frame (13) is jointed to the front of the base frame or plane (11) and may be overturned thereon, wherein the frame (12) of the back is pivoted, at the top, on said oblique frame (13) whereas its lower part is free and slides on the base frame or plane, and wherein said auxiliary frame (14) is pivoted on the oblique frame (13) and removably fastened in holes provided in the back of the base frame or plane.

4. A chair according to claim 1, wherein said oblique frame (113) comprises a lower cross-piece (113a) designed to be arranged and removably fastened in holes (111a) provided in the front of the base frame or plane (111) and may be overturned backwards when said cross-piece is unfastened, wherein the frame (112) of the back is pivoted, at the top, on said oblique frame (113) and comprises a lower part which is free and slides on the base frame or plane, and wherein said back frame (114) is pivoted, at the top, to the oblique frame (113) and inseparably jointed at the back of said base frame or plane.

5. A chair according to one of the previous claims, also comprising a supporting crutch-frame (15) positioned and overturnable under the base frame or plane (11).

6. A chair according to one of the previous claims, also comprising means for connection of safety belts.

## Patentansprüche

1. Kinder-Sicherheitssitz, welcher entworfen wurde, um auf dem Sitz eines Fahrzeugs angebracht zu werden und aus einer gepolsterten Haltestruktur (10a) besteht, dadurch gekennzeichnet, daß er aus folgenden Teilen zusammengesetzt ist: einem Grundrahmen bzw. einer Grundfläche (11), die den Sitz (11) trägt, einem Rahmen bzw. einer Fläche, die Rückenlehne trägt, welche sich vom Grundrahmen bzw. von der Grundfläche (11) erhebt, einem Querrahmen (13), welcher den vorderen Teil des Grundrahmens bzw. der Grundfläche (11) mit dem oberen Teil des hinteren Rahmens (12) verbindet, und einem Hilfsrahmen, welcher den Querrahmen (13) mit dem hinteren Teil des Grundrahmens bzw. der Grundfläche (11) verbindet, sowie mindestens einem Querrahmen (13,113) und dem obengenannten Hilfsrahmen, welche entworfen wurden, um mit dem Grundrahmen bzw. der Grundfläche (11) so verbunden zu werden, daß die Rückenlehne in aufrechter Position gehalten wird, wenn der Sitz zur Verwendung angebracht worden ist, bzw. um geöffnet zu werden, um zu ermöglichen, daß der hintere Rahmen (12) gekippt und parallel zum Grundrahmen bzw. zur Grundfläche (11) zusammengeklappt wird.

2. Kinder-Sicherheitssitz gemäß Anspruch 1, wobei der obengenannte Hilfsrahmen mit dem hinteren Teil des Grundrahmens bzw. der Grundfläche (11) so verbunden wird, daß die Rückenlehne (12) in aufrechter Position gehalten wird, wenn der Sitz gebrauchsbereit ist, bzw. daß er geöffnet wird, um zu ermöglichen, daß der hintere Rahmen (12) parallel zum Grundrahmen bzw. zur Grundfläche gekippt wird.

3. Kinder-Sicherheitssitz gemäß Anspruch 2, wobei der obengenannte Querrahmen (13) mit dem vorderen Teil des Grundrahmens bzw. der Grundfläche (11) verbunden wird und gekippt werden kann, wobei der Rahmen (12) der Rückenlehne am oberen Teil auf dem obengenannten Querrahmen (13) angelenkt wird, während der untere Teil frei ist und auf dem Grundrahmen bzw. der Grundfläche gleitet, und wobei der obengenannte Hilfsrahmen (14) auf dem Querrahmen (13) angelenkt wird und mittels der auf dem hinteren Teil des Grundrahmens bzw. der Grundfläche vorhandenen Ösen mit möglichem Ausklinken verbunden wird.

4. Kindersitz gemäß Anspruch 1, wobei der obengenannte Querrahmen (113) aus einem unteren Querstück (113a) besteht, welches entworfen wurde, um mittels der auf dem vorderen Teil des Grundrahmens bzw. der Grundfläche (111) vorhandenen Ösen (111a) mit möglichem Ausklinken angeordnet und verbunden zu werden, und nach hinten gekippt werden kann, wenn das obengenannte Querstück geöffnet wird, wobei der Rahmen (112) der Rückenlehne am oberen Teil auf dem obengenannten Querrahmen (113) angelenkt wird und aus einem freien unteren Teil besteht, welcher auf dem Grundrahmen bzw. der Grundfläche gleitet, und wobei der obengenannte hintere Rahmen (114) am oberen Teil auf dem Querrahmen (113) angelenkt und in untrennbarer Weise mit dem hinteren Teil des obengenannten Grundrahmens bzw. der Grundfläche verbunden wird.

5. Kindersitz gemäß einem der vorhergehenden Ansprüche, welcher auch aus einem kippbaren, unter dem Grundrahmen bzw. der Grundfläche (11) angebrachten Stützrahmen besteht.

6. Kindersitz gemäß einem der vorhergehenden Ansprüche, welcher auch aus Vorrichtungen zum Anschnallen der Sicherheitsgurte besteht.

## Revendications

1. Un siège de sûreté pour enfants conçu pour être appliqué au siège d'un véhicule, comprenant une structure d'appui capitonnée (10a), caractérisé par le fait qu'il possède une armature de base ou surface portante (11) soutenant le siège, une armature ou surface portante supportant l'arrière qui s'élève en partant de l'armature de base ou surface portante (11), un cadre oblique (13) qui relie la partie avant de l'armature de base ou surface portante (11) à la partie supérieure du cadre arrière (12) et un cadre auxiliaire (14) qui relie le cadre oblique (13) à l'arrière de l'armature de base ou structure portante (11). Au moins un entre le cadre oblique (13, 113) ou le cadre auxiliaire (14) est conçu pour être assujetti à l'armature de base ou structure portante (11) de façon à maintenir l'arrière vertical lorsque le siège est dans la position prête pour l'emploi, ou détaché pour permettre au cadre arrière (12) de retourner dans la position pliée, parallèle à l'armature de base ou structure portante (11).

2. Un siège de sûreté pour enfants conforme à la revendication 1, dans lequel ledit cadre auxiliaire (14) est assujetti à l'arrière de l'armature de base ou structure portante (11) de façon à maintenir l'arrière (12) vertical lorsque le siège est prêt à l'emploi, et détaché de façon à permettre au cadre arrière (12) de retourner parallèle à l'armature de base ou structure portante (11).

3. Un siège de sûreté conforme à la revendication 2, dans lequel ledit cadre oblique (13) est relié à la partie avant de l'armature de base ou structure portante (11) et peut basculer en ce point; le cadre arrière (12) est articulé en sa partie supérieure sur le oblique (13) alors que la partie inférieure est libre et coulisse sur l'armature de base ou structure portante, et le cadre auxiliaire (14) est articulé sur le cadre oblique (13) et est assujetti par une fixation amovible à des trous présents à l'arrière de l'armature de base ou structure portante.

4. Un siège conforme à la revendication 1, dans lequel ledit cadre oblique (113) est muni, dans le bas, d'une pièce croisée (113a) destinée à être engagée et assujettie par une fixation amovible dans des trous (111a) situés dans la partie avant de l'armature de base ou structure portante (111) et peut pivoter vers l'arrière lorsque ladite pièce croisée est relâchée; le cadre arrière (112) est articulé en sa partie supérieure sur le cadre oblique (113) alors que la partie inférieure est libre et coulisse sur l'armature de base ou structure portante; le cadre arrière (114) est articulé en sa partie supérieure sur le cadre oblique (112) et est jointé de façon inamovible avec l'arrière de l'armature de base ou structure portante.

5. Un siège conforme à une des revendications précédentes, comprenant également un cadre de support (15) placé et articulé sous l'armature de base ou structure portante (11).

6. Un siège conforme à une des revendications précédentes, comprenant également des systèmes pour l'accrochage de ceintures de sécurité.
